# EUROPEAN PATENT SPECIFICATION

(11) **EP 3 437 795 B1**
(45) Date of publication and mention of the grant of the patent: **07.07.2021**
(21) Application number: 16896944.2
(22) Date of filing: 31.03.2016
(51) Int. Cl.: G01B 5/008, G01B 21/04, B23Q 17/20, G05B 19/401, G05B 19/409

(54) **APPARATUS FOR MEASURING A WORKPIECE AND MACHINE TOOL**
VORRICHTUNG ZUM MESSEN EINES WERKSTÜCKS UND WERKZEUGMASCHINE
APPAREIL POUR MESURER UNE PIÈCE À USINER ET MACHINE-OUTIL

(43) Date of publication of application: 06.02.2019
(73) Proprietor: Makino Milling Machine Co., Ltd., Tokyo 152-8578 (JP)
(72) Inventor: ISHII, Kazunari, Aiko-gun Kanagawa 243-0303 (JP); KAWAI, Rie, Aiko-gun Kanagawa 243-0303 (JP); KASAI, Koji, Aiko-gun Kanagawa 243-0303 (JP); STANCU, Alexandra Florentina, Aiko-gun Kanagawa 243-0303 (JP)
(74) Representative: McWilliams, David John
(86) International application number: PCT/JP2016/060826
(87) International publication number: WO 2017/168727

(56) References cited:
- WO-A1-2015/097828
- JP-A- H01 301 042
- JP-A- 2008 111 770
- JP-A- 2009 110 273
- JP-A- 2016 018 255
- JP-U- S6 391 351

## Description

### FIELD

The present invention relates to an apparatus for measuring a workpiece capable of measuring a workpiece which is fixed on a table of a machine tool by a simple operation, and a machine tool.

### BACKGROUND

In machine tools, when a machine program is executed to machine a workpiece, it is necessary to provide the machine tool with a reference position of the workpiece. Thus, a reference point of the workpiece is measured using a measurement probe. A method for automatically executing a workpiece measurement operation by a measurement NC program is described in Patent Literature 1.

Furthermore, Patent Literature 2 describes a semi-automatic measurement method in which, after setting a measurement probe at a measurement position by a manual operation, when the probe moves towards the workpiece and contacts the workpiece, the coordinate values of the measurement probe are read, and these steps are sequentially repeated to perform the desired workpiece measurement.

### [CITATION LIST]

### [PATENT LITERATURE]

[PTL 1] Japanese Unexamined Patent Publication (Kokai) No. 01-301042
[PTL 2] Japanese Unexamined Patent Publication (Kokai) No. 2008-111770
[PTL 3] Patent Cooperation Treaty Publication WO 2015/097828 A1

### SUMMARY

### [TECHNICAL PROBLEM]

In the method of Patent Literature 1, in order to perform automatic measurement, it is necessary to prepare in advance an NC program including a measurement start position, the approximate dimensions of the workpiece, etc., as program parameters. In the case of mass production, workpiece measurement can be efficiently performed by preparing a measurement NC program. However, when preparing a prototype or in the case of low-volume multi-product production, creating measurement NC programs is problematic from the viewpoint of cost effectiveness.

In the method of Patent Literature 2, each time a workpiece is measured, it is necessary for the operator to select the measurement to be performed from, for example, a measurement menu and set the measurement for the apparatus for measurement. However, selecting the desired measurement type from among multiple measurement types is a time-consuming and labor-intensive task. Furthermore, in order for the measurement probe to reliably move towards the workpiece during measurement, it is necessary to set the approximate dimensions of the workpiece in the machine (NC device) in advance, which further increases the time required for the measurement operation.

WO 2015/097828 A1 describes a control device for a machine tool having a display unit that displays an input screen via which machining information regarding machining to be performed on a workpiece is inputted and an input unit via which letters and/or numbers are inputted into machining-information fields on the input screen.

The present invention aims to solve such problems of the prior art as a technical problem and aims to provide a measuring apparatus and a machine tool which enables an operator to perform workpiece measurements quickly and easily.

### [SOLUTION TO PROBLEM]

In order to achieve the above objects, according to the present invention defined in the independent claim 1, there is provided an apparatus for measuring a workpiece which is fixed to a table of a machine tool which includes a plurality of feed axes for moving a spindle and the table relative to each other, the apparatus comprising a measurement probe mounted on a front end of the spindle of the machine tool, feed axes for moving the spindle and the table relative to each other by a manual operation of an operator, a measurement type determination unit and a display unit, wherein when the spindle and the table are moved relative to each other by the manual operation of the operator and the measurement probe contacts the workpiece fixed on the table, the feed axis which has been used to move the measurement probe and the movement direction of the feed axis are stored, a type of measurement performed by the operator is predicted by the measurement type determination unit based on history of the feed axis which has been used to move the measurement probe and the movement direction of the feed axis, and the predicted measurement type is displayed by the display unit.

### [ADVANTAGEOUS EFFECTS OF INVENTION]

Since the operator jog-feeds the measurement probe and teaches the measuring points directly for the measuring apparatus, it is not necessary for the operator to select the to-be-measured measurement target or to input the approximate dimensions of the workpiece.

### BRIEF DESCRIPTION OF DRAWINGS

FIG. 1 is a side view showing an example of a machine tool to which the present invention is applied.
FIG. 2 is a perspective view of a control panel.
FIG. 3 is a plan view of a jog console.
FIG. 4 is a block diagram of a measuring apparatus according to a preferred embodiment of the present invention.
FIG. 5 is a schematic view of a window displayed on a display unit.
FIG. 6 is a schematic view of the window displayed on the display unit.
FIG. 7 is a schematic view of the window displayed on the display unit.
FIG. 8 is a schematic view of the window displayed on the display unit.
FIG. 9 is a schematic view of the window displayed on the display unit.
FIG. 10 is a schematic view of the window displayed on the display unit.
FIG. 11 is a schematic view of the window displayed on the display unit.
FIG. 12 is a schematic view of the window displayed on the display unit.
FIG. 13 is a schematic view of the window displayed on the display unit.
FIG. 14 is a schematic view of the window displayed on the display unit.
FIG. 15 is a schematic view of the window displayed on the display unit.
FIG. 16 is a schematic view of the window displayed on the display unit.
FIG. 17 is a schematic view showing an example of a measurement type (corner measurement).
FIG. 18 is a schematic view showing an example of a measurement type (center measurement).
FIG. 19 is a schematic view showing an example of a measurement type (pocket center measurement).
FIG. 20 is a schematic view showing an example of a measurement type (cylindrical hole center measurement).
FIG. 21 is a schematic view showing an example of a measurement type (cylindrical center measurement).
FIG. 22 is a schematic view showing an example of a measurement type (inclination measurement).
FIG. 23 is a schematic view showing an example of a measurement type (single-axis measurement).
FIG. 24 is a schematic view showing an example of a measurement type (inclination measurement between round holes).
FIG. 25 is a schematic view showing an example of a measurement type (center point measurement between round holes).
FIG. 26 is a schematic view showing an example of a measurement type (three-hole center measurement).
FIG. 27 is a schematic view showing an example of a measurement type (four-hole center measurement).

### DESCRIPTION OF EMBODIMENTS

Preferred embodiments of the present invention will be described below with reference to the attached drawings.

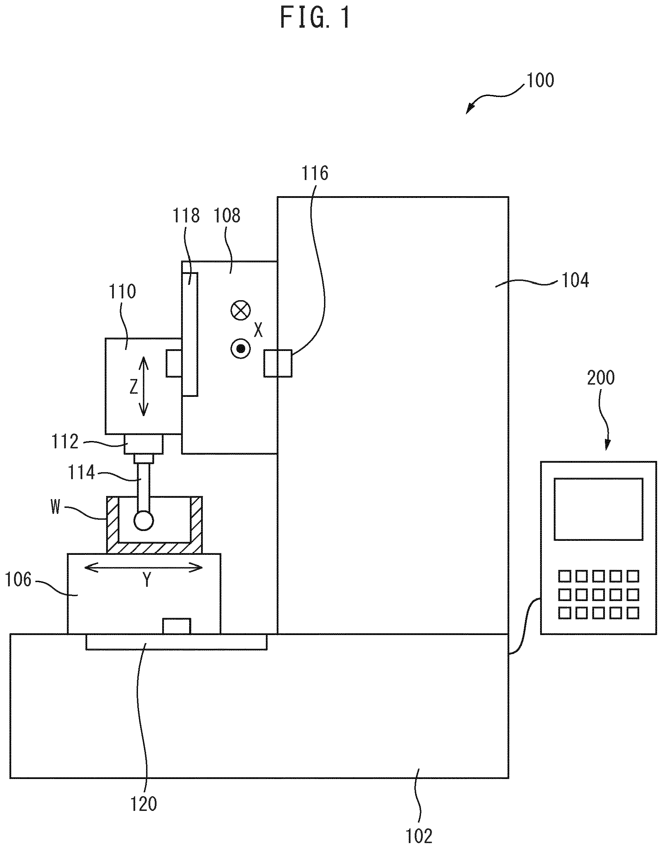

FIG. 1 shows an example of a machine tool to which the present invention is applied. In FIG. 1, a machine tool 100 according to a preferred embodiment of the present invention is configured as a vertical machining center and comprises a bed 102 as a base fixed on the floor of a factory, a table 106 on which a workpiece W can be fixed and which is provided on the upper surface of the front portion (the left side in FIG. 1) of the bed 102 and which is movable in the forwards and backwards directions or the Y-axis directions (the left and right directions in FIG. 1), a column 104 attached on the upper surface of the bed 102 on the rear end side (the right side in FIG. 1) of the bed 102, an X-axis slider 108 which is provided on the front surface of the column 104 and which is movable in the left and right directions or the X-axis directions (the directions perpendicular to the page of FIG. 1), and a spindle head 110 which is attached to the front end of the X-axis slider 108 so as to be movable in the upwards and downwards directions or the Z-axis directions and which supports a spindle 112 in a rotatable manner. The machine tool 100 further comprises an operation board 200 with which an operator can operate the machine tool 100.

A tool (not shown) for machining the workpiece W fixed on the table 106 is mounted on the front end of the spindle 112. In FIG. 1, a measurement probe 114 for measuring the workpiece W is mounted on the front end of the spindle 112 in place of a tool. The measurement probe 114 can be mounted by a manual operation by the operator of the machine tool 100. Alternatively, the measurement probe 114 can be automatically mounted by an NC device 150 of the machine tool 100.

The table 106 is provided on the upper surface of the bed 102 so as to be reciprocatable along a pair of Y-axis guide rails (not shown) extending in the horizontal Y-axis directions (the lateral directions in FIG. 1). A ball screw (not shown) extending in the Y-axis directions as a Y-axis feed apparatus for driving the table 106 forwards and backwards along the Y-axis guide rails and a Y-axis servo motor (not shown) connected to one end of the ball screw are provided on the bed 102. A nut (not shown) which engages with the ball screw is attached to the table 106. A Y-axis scale 120 for measuring the Y-axis direction coordinate position of the table 106 is attached to the table 106.

The X-axis slider 108 is provided on the upper portion of the front surface of the column 104 so as to be reciprocatable along a pair of X-axis guide rails (not shown) extending in the X-axis directions. A ball screw (not shown) extending in the X-axis directions as an X-axis feed apparatus for driving the X-axis slider 108 forwards and backwards along the X-axis guide rails and an X-axis servo motor (not shown) connected to one end of the ball screw are provided on the column 104. A nut (not shown) which engages with the ball screw is attached to the X-axis slider 108. An X-axis scale 116 for measuring the X-axis direction coordinate position of the X-axis slider 108 is attached to the column 104.

The spindle head 110 is provided on the front end of the X-axis slider 108 so as to be reciprocatable along a pair of Z-axis guide rails extending in the Z-axis directions (the upwards and downwards directions in FIG. 1). A ball screw (not shown) extending in the Z-axis directions as a Z-axis feed apparatus for driving the spindle head 110 forwards and backwards along the Z-axis guide rails and a Z-axis servo motor (not shown) connected to one end of the ball screw are provided on the X-axis slider 108. A nut (not shown) which engages with the ball screw is attached to the spindle head 110. A Z-axis scale 118 for measuring the Z-axis direction coordinate position of the spindle head 110 is provided on the X-axis slider 108.

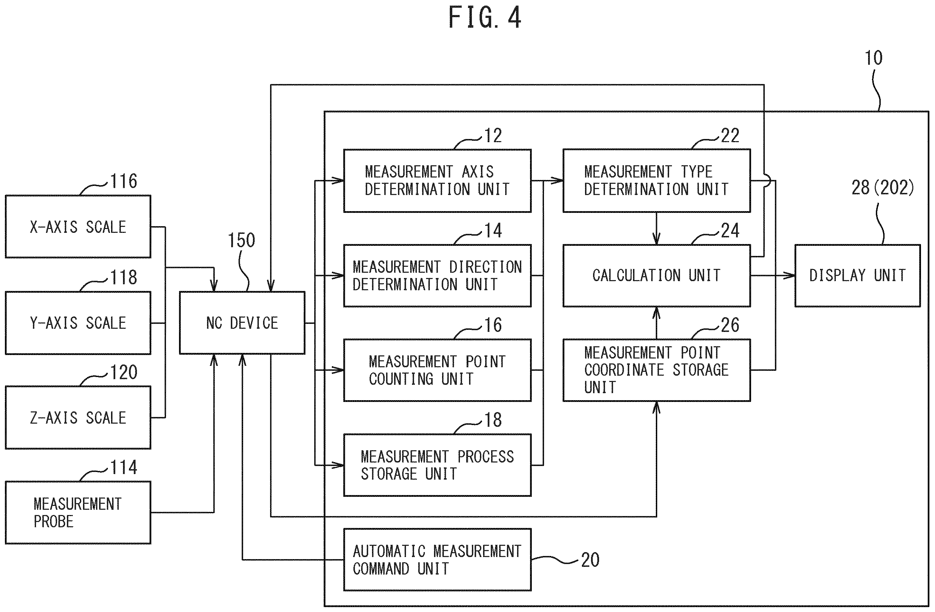

The X-axis servo motor, Y-axis servo motor, and Z-axis servo motor as well as the X-axis scale 116, Y-axis scale 120, and Z-axis scale 118 are connected to the NC device 150 (FIG. 4) for controlling the machine tool 100. The measurement probe 114 is also connected to the NC device 150. The power (current value) supplied to the X-axis servo motor, the Y-axis servo motor, and the Z-axis servo motor is controlled by the NC device 150.

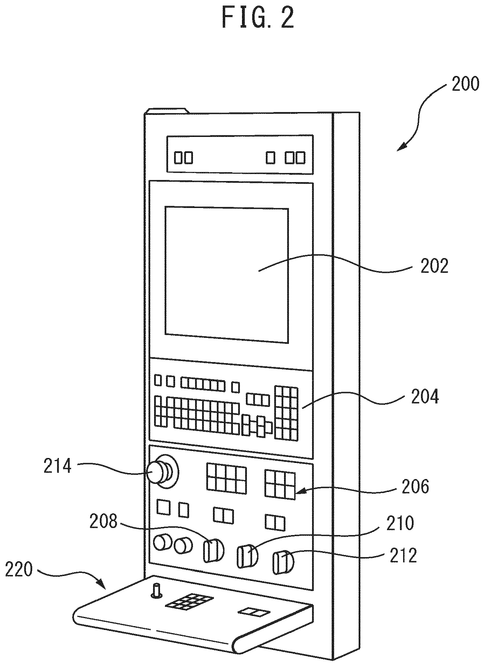

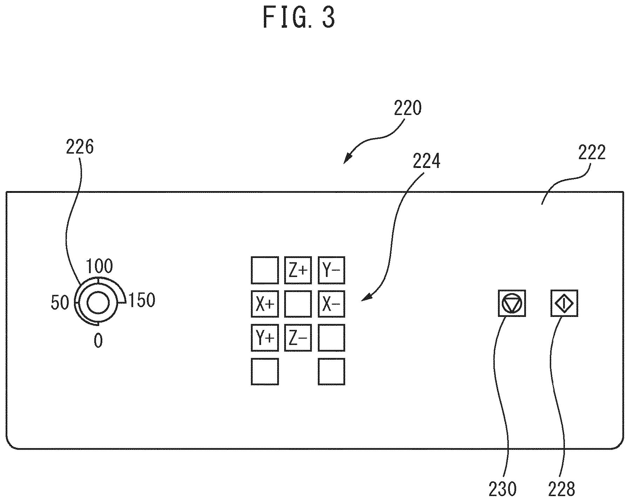

The operation board 200 will be described with reference to FIGS. 2 and 3. The operation board 200 includes a display panel 202 which forms a display unit 28 (FIG. 4) of the measuring apparatus, which is described later. The display panel 202 of the present embodiment can be constituted by a touch panel with which a desired portion can be selected by contacting the window. The operation board 200 includes a key input part 204. A plurality of key switches are disposed on the key input part 204. Desired numerals or characters can be input by pressing the key switches on the key input part 204. Furthermore, the operation board 200 includes an operation switch part 206 which performs the selection of desired operations, override setting parts 208 to 212 which perform the setting of override values, and an emergency stop button 214. The override setting parts 208 to 212 can set, for example, the override value of the rotational speed of the spindle, the override value of the feed speed of machining, etc.

The operation board 200 further comprises a jog console 220 which includes a board 222 extending in a shelf-like shape forward from the lower end portion of the operation board 220. Jog buttons 224 for individually jog-feeding each of the X-feed axis, Y-feed axis, and Z-feed axis, an override switch 226 for setting the speed of the jog-feeding, an automatic measurement start button 228, and a measurement stop button 230 are arranged on the board 222 of the jog console 220.

Next, referring to FIG. 4, which is a block diagram of a measuring apparatus according to the preferred embodiment of the present invention, the measuring apparatus 10 comprises, as primary constituent elements, a measurement axis determination unit 12, a measurement direction determination unit 14, a measurement point counting unit 16, a measurement process storage unit 18, an automatic measurement command unit 20, a measurement type determination unit 22, a calculation unit 24, a measurement point coordinate storage unit 26, and a display unit 28.

The measurement axis determination unit 12 determines which feed axis among the X-feed axis, Y-feed axis, and Z-feed axis is used to measure the workpiece W based on the values of the X-axis, Y-axis, and Z-axis scales 116, 120, and 118 from the change in the position coordinates of the measurement probe 114 in the machine coordinate system. The measurement direction determination unit 14 also determines the measurement direction from the change of the position coordinates of the measurement probe 114 in the machine coordinate system.

The measurement point counting unit 16 stores the number of measurement points by counting the number of times the measurement probe 114 contacts workpiece W and the number of times the X-axis, the Y-axis, and the Z-axis feeding stops. The jog-feed storage unit 18 stores the ordinal number of the step of the current jog-feeding in association with the axis and the direction currently being measured, determined by the measurement axis determination unit 12 and the measurement direction determination unit 14. The automatic measurement command unit 20 issues a command to the NC device 150 to reproduce the measurement operation according to the jog-feed operation executed by the operator via the jog console 220 when the automatic measurement start button 228 of the jog console 220 of the operation board 200 is pressed by the operator.

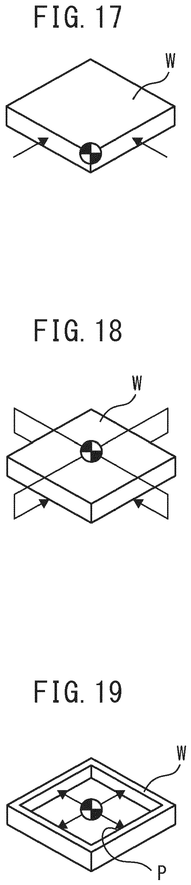

The measurement type determination unit 22 stores the types of measurements which can be executed by the measuring apparatus 10 in association with the measurement axis, the measurement method, the number of measurement points, and the measurement order. FIGS. 17 to 27 show the types of measurements which can be executed by the measuring apparatus 10. FIG. 17 shows a corner measurement in which the coordinates of the corners at which the sides of a workpiece intersect are measured by moving the measurement probe 114 toward the workpiece W from the X-axis direction and the Y-axis direction and contacting the sides of the workpiece W.

FIG. 18 shows a center measurement in which the center coordinates of a rectangular workpiece W are measured, and shows the case in which the measurement probe 114 moves towards the workpiece W along the X-axis or the Y-axis and contacts the side surface of the workpiece W, next moves towards the workpiece W from the opposite direction along the X-axis or the Y-axis and contacts the opposite side surface of the workpiece W, next moves towards the workpiece W along the Y-axis or the X-axis and contacts the side surface of the workpiece W, and next moves towards the workpiece W from the opposite direction along the Y-axis or the X-axis and contacts the opposite side of the workpiece W, whereby the center coordinates of the workpiece W are measured. When the coordinates of the two measurement points measured from the X-axis direction are represented by (x₁, y₁) and (x₂, y₂), and the coordinates of the two measurement points measured from the Y-axis direction are represented by (x₃, y₃) and (x₄, y₄), the center coordinates are represented by ((x₁ + x₂)/2, (y₃ + y₄)/2).

FIG. 19 shows a pocket center measurement in which the center of a rectangular pocket or recess formed in the workpiece W is measured, and shows the case in which the measurement probe 114 is disposed inside the pocket of the workpiece W, the measurement probe 114 moves towards one inside surface of the pocket along the X-axis or the Y-axis and contacts the inside surface, is next fed in the opposite direction along the X-axis or the Y-axis and contacts the opposite inside surface of the pocket, next moves towards the workpiece W along the Y-axis or the X-axis and contacts one inner surface of the pocket, and is next fed in the opposite direction along the Y-axis or the X-axis and contacts the opposite inner surface of the workpiece W, whereby the center coordinates of the pocket or recess of the workpiece W are measured. When the coordinates of the two measurement points measured from the X-axis direction are represented by (x₁, y₁) and (x₂, y₂), and the coordinates of the two measurement points measured from the Y-axis direction are represented by (x₃, y₃) and (x₄, y₄), the center coordinates are represented by ((x₁ + x₂)/2, (y₃ + y₄)/2).

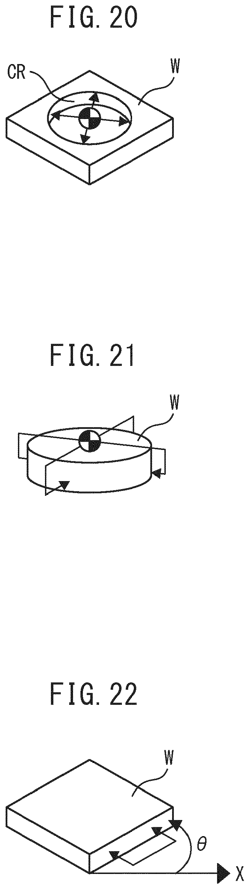

FIG. 20 shows a cylindrical hole center measurement in which the center of a cylindrical hole formed in the workpiece W is measured. In cylindrical hole center measurement, like in the case of pocket center measurement, the measurement probe 114 is disposed inside a cylindrical recess formed in the workpiece W, but unlike the case of pocket center measurement, the measurement probe 114 is moved in the vicinity of the center axis of the cylindrical hole by a jog-feed operation. At this time, when the cylinder measurement button 256 is tapped or clicked and the automatic measurement start button 228 is pressed the measurement is predicted to be the cylindrical center measurement in which the position of the center axis line of the cylindrical hole is determined. When inner circle measurement is predicted, by an automatic operation, the measurement probe 114 performs an operation to contact the inner surface of the cylindrical recess along the X-axis, then performs an operation to contact the inner surface of the cylindrical recess by moving in the opposite direction along the X-axis, next performs an operation to contact the inner surface of the cylindrical recess along the Y-axis direction from a position near the initial center-axis line, and finally performs an operation to contact the inner surface of the cylindrical shape by moving in the opposite direction along the Y-axis. The position of the center-axis of the cylindrical hole is calculated from the coordinate values obtained by such contacts.

FIG. 21 shows a cylindrical center measurement in which the center coordinate of a cylindrical workpiece W is measured.

Unlike the case of the cylindrical hole center measurement, first, the measurement probe 114 is brought into contact with an arbitrary portion of the cylindrical side surface by a jog-feed operation. After measuring the arbitrary portion of the cylindrical side surface, the measurement probe 114 is placed near the center axis line of the cylinder and is moved above the cylindrical shape by a jog-feed operation. At this time, when the cylinder measurement button 256 is tapped or clicked and the automatic measurement start button 228 is pressed, the measurement is predicted to be cylindrical center measurement in which the position of the center axis line of the cylinder is determined. When a cylindrical center measurement is predicted, by an automatic operation, an operation for contacting the measurement probe 114 from the outside of the cylinder toward the inside is performed in each of the X-axis direction, the direction opposite the X-axis, the Y-axis direction, and the direction opposite the Y-axis. The position of the center-axis of the cylinder is calculated from the coordinate values obtained by such contacts.

FIG. 22 shows an inclination measurement in which the inclination angle of the workpiece with respect to the X-axis is measured. In the inclination measurement, the measurement probe 114 linearly moves towards one side surface of the workpiece W and contacts the side surface. Next, the measurement probe 114 is moved in a direction perpendicular to the straight path along which the first movement of the probe 114 toward the workpiece occurred. Next, the measurement probe 114 is linearly moved toward the one side surface of the workpiece W parallel to the straight path and contacts the side surface, whereby the inclination angle θ of the workpiece W with respect to the X-axis is measured. When the coordinates of the two measurement points are represented by (x₁, y₁) and (x₂, y₂), the inclination angle θ can be obtained by calculation using the formula θ = ATAN(y₂ - y₁)/(x₂ - x₁).

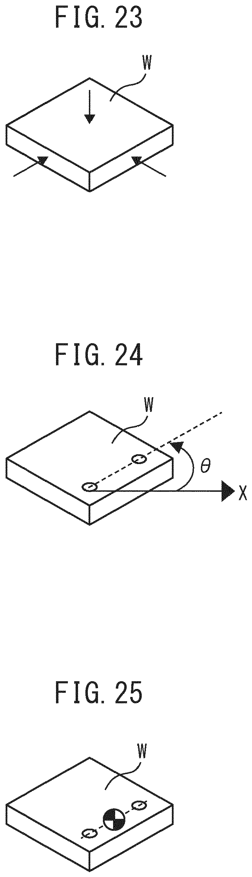

FIG. 23 shows a single axis measurement in which the X coordinate, Y coordinate, or Z coordinate of a surface of the workpiece W perpendicular to the X-axis, Y-axis, or Z-axis is measured. The single axis measurement measures the X coordinate, Y coordinate, or Z coordinate of a side surface by moving the measurement probe 114 toward the workpiece W in the X-axis, Y-axis, or Z-axis direction of the workpiece W and contacting a side surface perpendicular to the X-axis, Y-axis, or Z-axis of the workpiece W.

FIG. 24 shows an inclination measurement between round holes in which the inclination angle of a straight line between the centers of two round holes relative to the X-axis is measured. The inclination measurement between round holes is obtained by determining the center of each of the two round holes by the cylindrical hole center measurement of FIG. 20, and measuring the inclination angle of the straight line between the centers of the two round holes relative to the X-axis in the same manner as the inclination measurement of FIG. 22.

FIG. 25 shows a round hole midpoint measurement in which the coordinates of the midpoint between the centers of two round holes are measured. In the round hole midpoint measurement, each of the centers of the two round holes is determined by the cylindrical hole center measurement of FIG. 20, and the midpoint of the two centers is calculated. When the coordinates of the two centers are represented by (x₁, y₂) and (x₂, y₂), the coordinates of the midpoint is represented by ((x₁ + x₂) / 2, (y₁ + y₂) / 2).

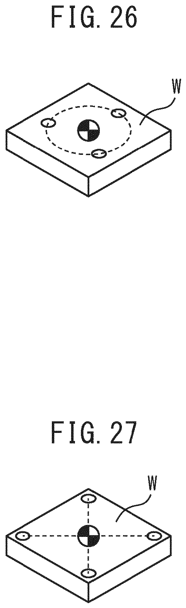

FIG. 26 shows a three-hole center measurement in which the coordinates of the centers of a circle passing through the centers of three round holes are measured. In the three-hole center measurement, each of the centers of the three holes is obtained by the cylindrical hole center measurement of FIG. 20, and the center of the circle passing through the three centers is calculated.

FIG. 27 shows a four-hole center measurement in which the coordinates of the center of a circle passing through the centers of four round holes are measured. In the four-hole center measurement, each of the centers of the four round holes is obtained by the cylindrical hole center measurement of FIG. 20, and the center of a circle passing through the four centers is calculated.

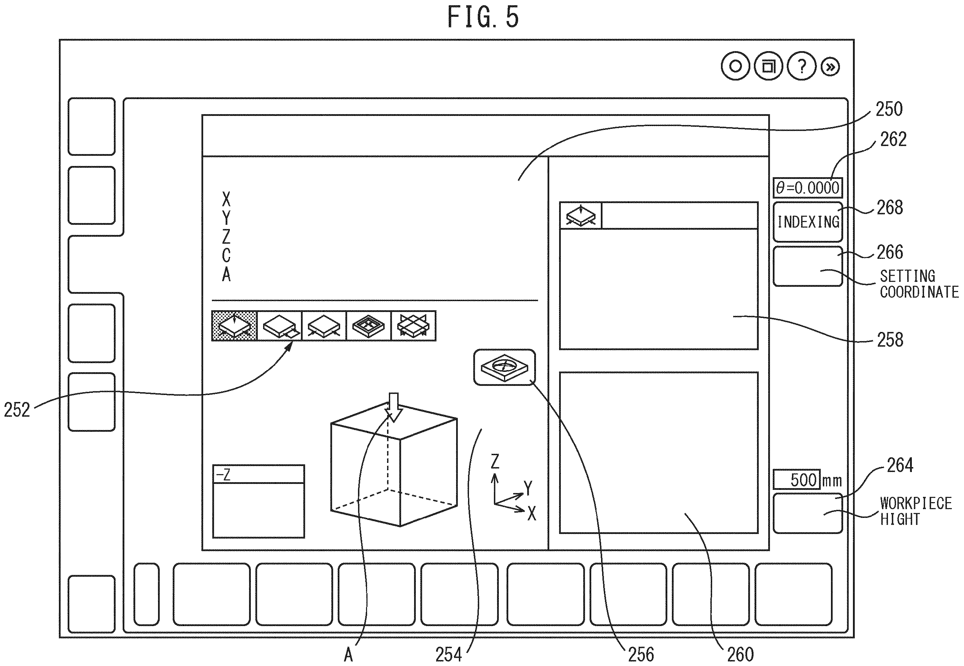

Next, an example of the workpiece measurement method of the present invention will be described with reference to FIGS. 5 to 16.

FIGS. 5 to 16 show windows displayed on the display unit 28 (202). The window includes an icon 252 which shows the feed axis coordinate display area 250 and the measurement type, a measurement probe movement direction display area 254 which shows the movement direction (arrow A) of the measurement probe 114 along with the workpiece W, a cylinder measurement button 256 for automatically executing a cylindrical hole center measurement, a coordinate display area 258 which displays coordinate values as measurement results, a dimensions display area 260 which displays dimension values as measurement results, an inclination angle display area 262 which displays the inclination angle of the workpiece W with respect to the X-axis, and a button 264 for setting a danger zone of the measurement probe 114 in the Z-axis direction. Furthermore, the window includes a coordinate setting button 266 for setting the measured coordinates in the workpiece coordinate system of the machine tool.

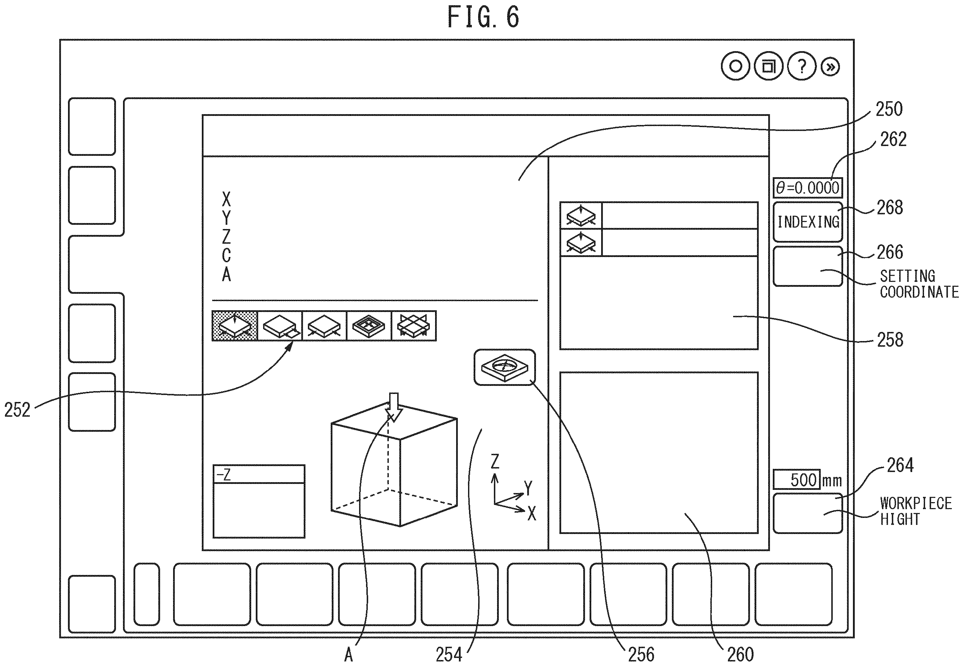

FIGS. 5 and 6 show the height of the workpiece W, specifically, the Z-axis direction dimensional measurement of the workpiece W. When the operator operates the jog button 224 of the jog console 220, the measurement probe 114 moves downward along the Z-axis from above the workpiece W, and the measurement axis determination unit 12 determines that the Z-axis is being measured from the movement commands of each of the X-feed axis, Y-feed axis, and Z-feed axis. Simultaneously, the measurement direction determination unit 14 determines that the measurement probe 114 is moving downward along the Z-axis from the movement commands. As a result, a state in which the measurement probe 114 is moving downward along the Z-axis from above the workpiece W is shown on the measurement probe movement direction display area 254 as arrow A.

When the measurement probe 114 contacts the upper surface of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26. Furthermore, upon receiving the skip signal, the NC device 150 reverses the Z-axis feeding, spaces the measurement probe 114 from the workpiece W, and after moving a predetermined distance, the reversing operation of the measurement probe 114 stops. The measurement process storage unit 18 stores the aforementioned jog-feed operation performed by the operator as a first step.

At this time, the measurement type determination unit 22 receives information that only the Z-axis was used in the current measurement from the measurement axis determination unit 12, information that the measurement probe 114 moved in the direction toward the workpiece W along the Z-axis from the measurement direction determination unit 14, information that there is only one measurement point from the measurement point counting unit 16, and information that the current measurement includes only the step in which the measurement probe 114 moved along the Z-axis from the measurement process storage unit 18. Based on this information, the single axis measurement shown in FIG. 23 is extracted as the measurement taught by the jog-feeding performed by the operator and the icon of FIG. 23 is actively displayed as the icon 252 indicating the measurement type.

When the operator presses the automatic measurement start button 228 of the jog console 220, an automatic measurement program stored in the NC device 150 is executed, and the measurement probe 114 is moved downward along the Z-axis in the direction of the coordinates (the coordinates of each of the X-feed axis, Y-feed axis, and Z-feed axis when the measurement probe 114 came into contact with the workpiece W) of the measurement points stored in the measurement point coordinate storage unit 26. When the frond end of the measurement probe 114 contacts the upper surface of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26. Furthermore, upon receiving the skip signal, the NC device 150 reverses the Z-axis feeding, spaces the measurement probe 114 from the workpiece W, and after moving a predetermined distance, the reversing operation of the measurement probe 114 stops. When the automatic measurement has finished, the calculation unit 24 calculates the Z-axis direction dimension as the height of the workpiece W based on the measurement value. The measurement result of the Z-axis direction dimension is displayed on the coordinate display area 258 as the height of the workpiece W.

By performing measurement in accordance with the measurement program stored in the NC device in this way, it is possible to optimize the speed at which the measurement probe 114 moves towards the workpiece W, whereby the measurement error of the measurement probe 114 can be reduced.

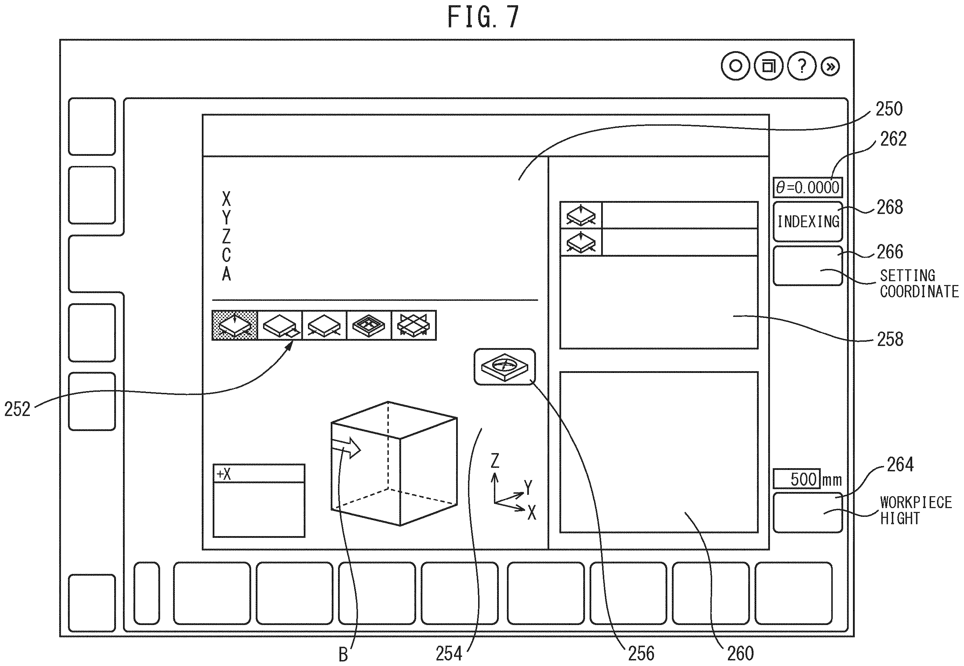

Referring to FIG. 7, when the operator operates the jog button 224 of the jog console 220, the measurement probe 114 moves towards the workpiece W along the X-axis, and the measurement axis determination unit 12 determines that the X-axis measurement is being performed from the movement commands of each of the X-feed axis, Y-feed axis, and Z-feed axis. Simultaneously, the measurement direction determination unit 14 determines that the measurement probe 114 is moving in a direction in which the X coordinate values increase from the movement commands of each of the X-feed axis, Y-feed axis, and Z-feed axis. As a result, a state in which the measurement probe 114 is moving in the positive direction along the X-axis is shown on the measurement probe movement direction display area 254 as arrow B.

When the measurement probe 114 contacts the side surface of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26. Furthermore, upon receiving the skip signal, the NC device reverses the X-axis feeding, spaces the measurement probe 114 from the workpiece W, and after moving a predetermined distance, the reversing operation of the measurement probe 114 stops. The measurement process storage unit 18 stores the aforementioned jog-feed operation performed by the operator as a first measurement step.

At this time, the measurement type determination unit 22 receives information that only the X-axis was used in the current measurement from the measurement axis determination unit 12, information that the measurement probe 114 moved in the positive direction along the X-axis from the measurement direction determination unit 14, information that there is only one measurement point from the measurement point counting unit 16, and information that the current measurement includes only the step in which the measurement probe 114 moved along the X-axis from the measurement process storage unit 18. Based on this information, the single axis measurement shown in FIG. 23 is extracted as the measurement taught by the jog-feeding performed by the operator, and the icon of FIG. 23 is actively displayed as the icon 252 indicating the measurement type.

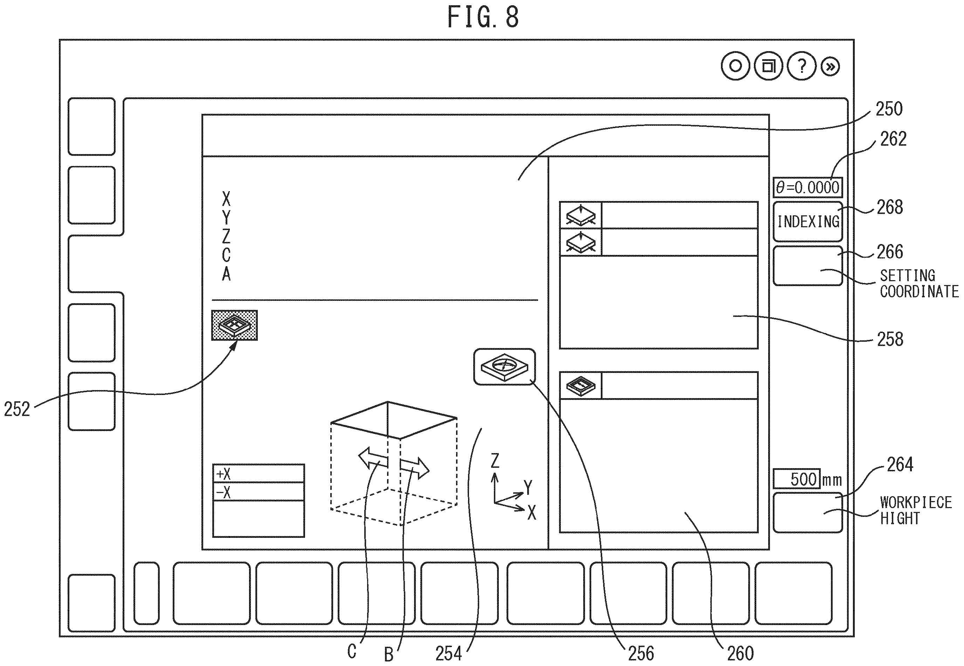

When the operator continues the jog-feed operation, the measurement probe 114 moves towards the workpiece W in the direction opposite to the arrow B along the X-axis, and the measurement axis determination unit 12 determines that measurement of the X-axis is currently being performed from the movement commands of each of the X-feed axis, Y-feed axis, and Z-feed axis. Simultaneously, the measurement direction determination unit 14 determines that the measurement probe 114 is moving along the X-axis in the negative direction from the movement commands of each of the X-feed axis, Y-feed axis, and Z-feed axis. As a result, a state in which the measurement probe 114 is moved in the negative direction along the X-axis is shown by arrow C in FIG. 8 on the measurement probe movement direction display area 254.

When the measurement probe 114 contacts the side surface of the workpiece W, a skip signal is output from the measurement probe 114, and the coordinates of each of the X-feed axis, Y-feed axis, and Z-feed axis at this time are output from the NC device 150 to the measurement point coordinate storage unit 26, the X-axis feeding is reversed, and the measurement probe 114 is moved in the direction opposite the workpiece W. When the measurement probe 114 has moved by a predetermined distance, the reversing operation of the measurement probe 114 stops. The measurement process storage unit 18 stores the jog-feed operation performed by the operator as a second step.

At this time, the measurement type determination unit 22 receives information that the X-axis was used in the measurement from the measurement axis determination unit 12, information that the measurement probe 114 moved in both the positive and negative directions along the X-axis from the measurement direction determination unit 14, information that there are two measurement points from the measurement point counting unit 16, and information that the current measurement includes two steps in which the measurement probe 114 moved in opposite directions along the X-axis from the measurement process storage unit 18. The measurement type determination unit 22 then determines from the coordinates of the two measurement points and the measurement directions whether an inward facing surface was measured or an outward facing surface was measured. When an inward facing surface was measured, the pocket center measurement shown in FIG. 19 is extracted as the measurement taught by the jog-feeding performed by the operator and the icon of FIG. 19 is displayed as the icon 252 indicating the possible measurement type (FIG. 8).

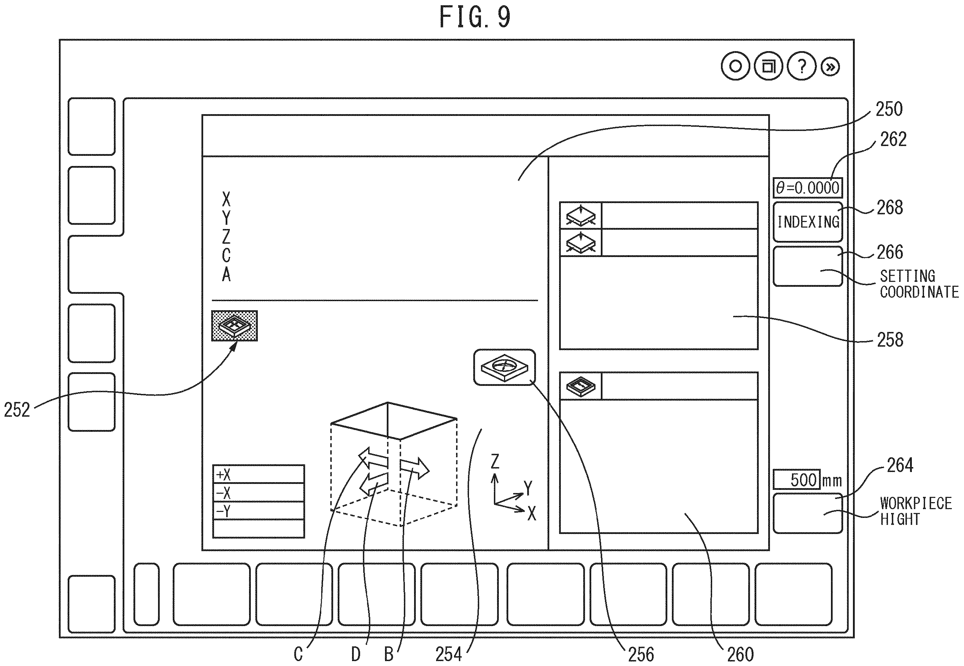

Further, when the operator continues the jog-feed operation, the measurement probe 114 moves towards the workpiece W along the Y-axis, and the measurement axis determination unit 12 determines that measurement of the Y-axis is being performed from the movement commands of each of the X-feed axis, Y-feed axis, and Z-feed axis. Simultaneously, the measurement direction determination unit 14 determines that the measurement probe 114 is moving in a direction in which the Y-coordinate values are decreasing from the movement commands of each of the X-feed axis, Y-feed axis, and Z-feed axis. As a result, a state in which the measurement probe 114 moves in the negative direction along the Y-axis is shown on the measurement probe movement direction display area 254 as arrow D (FIG. 9).

When the measurement probe 114 contacts the side surface of the workpiece W, a skip signal is output from the measurement probe 114, the coordinates of each of the X-feed axis, Y-feed axis, and Z-feed axis are output from the NC device 150 to the measurement point coordinate storage unit 26, the Y-axis feeding is reversed, and the measurement probe 114 is moved in a direction away from the workpiece W. When the measurement probe 114 has moved a predetermined distance, the reversing operation of the measurement probe 114 stops. The measurement process storage unit 18 stores the above jog-feed operation performed by the operator as a third measurement step.

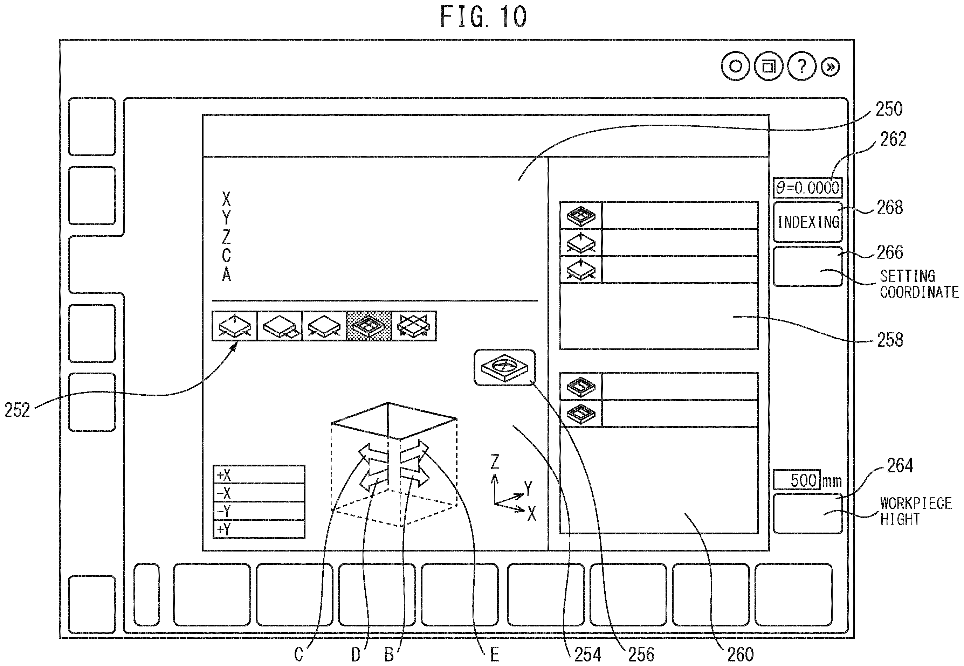

When the operator continues the jog-feed operation, the measurement probe 114 moves in the direction opposite the arrow D along the Y-axis, and the measurement axis determination unit 12 determines that measurement of the Y-axis is being performed from the movement commands for each of the X-feed axis, Y-feed axis, and Z-feed axis. Simultaneously, the measurement direction determination unit 14 determines that the measurement probe is moving in the positive direction along the Y-axis from the movement commands for each of the X-feed axis, Y-feed axis, and Z-feed axis. As a result, a state in which the measurement probe 114 is moving in the positive direction along the Y-axis is shown on the measurement probe movement direction display area 254 as arrow E of FIG. 8 (FIG. 10).

When the measurement probe 114 contacts the side surface of the workpiece W, a skip signal is output from the measurement probe 114, and the coordinates of each of the X-axis, Y-axis, and Z-axis directions at that time are output from the NC device 150 to the measurement point coordinate storage unit 26, the Y-axis feeding is reversed, and the measurement probe 114 is moved in a direction away from the workpiece W. When the measurement probe 114 has moved a predetermined distance, the reversing operation of the measurement probe 114 stops. The measurement process storage unit 18 stores the above jog-feed operation performed by the operator as a fourth measurement step.

At this time, the measurement type determination unit 22 receives information that the X-axis and the Y-axis were used in the measurement from the measurement axis determination unit 12, information that the measurement probe 114 moved in both the positive and negative directions along the X-axis and the Y-axis from the measurement direction determination unit 14, information that there are four measurement points from the measurement point counting unit 16, and information that the current measurement includes four steps in which the measurement probe 114 moved in both the positive and negative directions along the X-axis and then both the positive and negative directions along the Y-axis. Based on such information, the pocket center measurement shown in FIG. 19 is extracted as the measurement taught by the jog-feeding performed by the operator and the icon shown in FIG. 19 is displayed as the icon 252 indicating the measurement type (FIG. 10).

When performance of a more sophisticated measurement is desired, it is preferable to bring the measurement probe 114 and the workpiece W into contact with each other at a constant speed so as to make the deflection amount of the measurement probe 114 uniform when the skip signal is output. In the case in which a measurement where contact is made under constant speed conditions is performed, an apparatus for measuring a workpiece of a type in which when the measurement probe 114 contacts the workpiece W by the jog-feed operation performed by the operator and the automatic measurement start button 228 of the jog console 220 is pressed, the contact operation between the measurement probe 114 and the workpiece W performed immediately before is automatically performed at a constant speed is used. When this type of apparatus for measuring a workpiece is used, each time the operator teaches the measuring probe 114 to contact the workpiece W by the jog-feed operation, the operator pushes the automatic measurement start button and automatically repeats the constant speed measurement.

When the front end of the measurement probe 114 contacts the inner surface of the pocket of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26.

The NC device 150 executes a similar output for all of four measurement points. The calculation unit 24 obtains the center coordinates of the pocket of the workpiece W from the coordinate values of the four measurement points. The measurement results are displayed on the coordinate display area 258 along with the icon of FIG. 19.

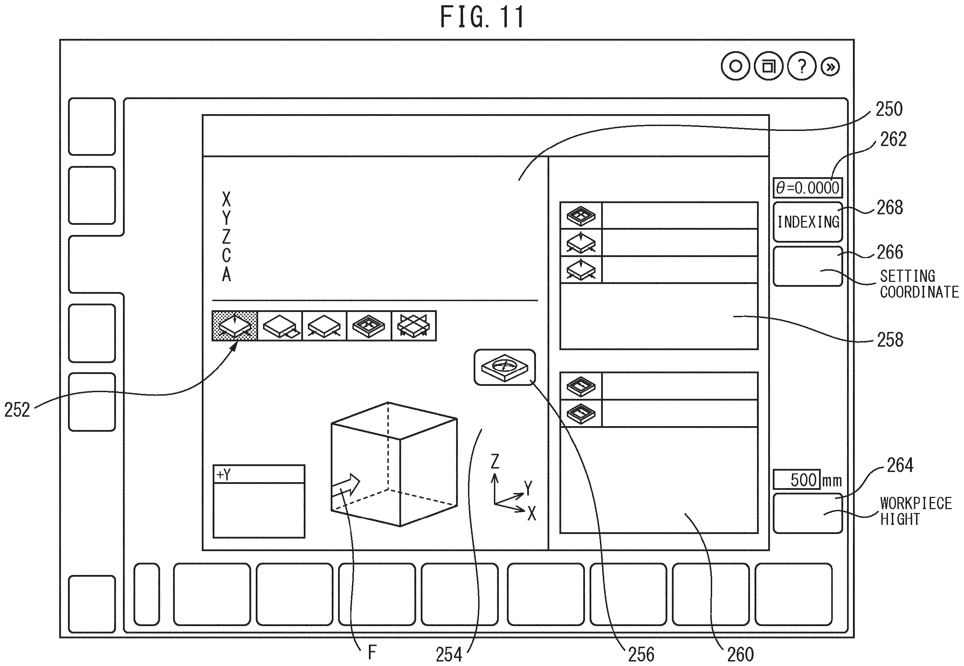

In FIG. 11, when the measurement probe 114 moves towards the workpiece W along the Y-axis by further jog-feed operations performed by the operator, the measurement axis determination unit 12 determines that the Y-axis is being measured, and simultaneously, the measurement direction determination unit 14 determines that the measurement probe 114 is moving in the positive direction along the Y-axis. As a result, a state in which the measurement probe 114 is moving in the positive direction along the Y-axis is shown on the measurement probe movement direction display area 254 as arrow F.

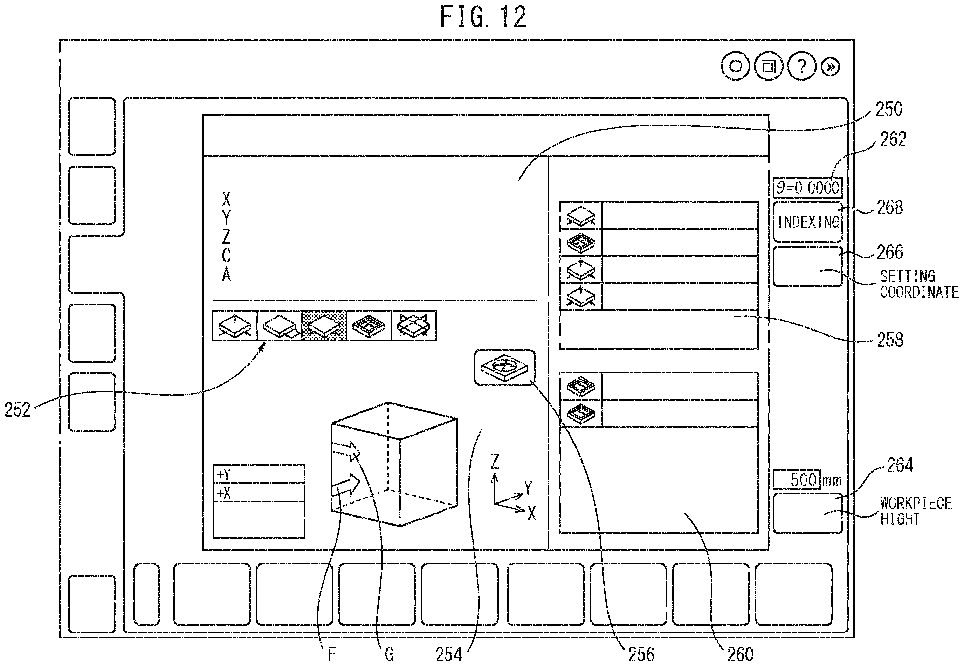

When the measurement probe 114 moves towards the workpiece W along the X-axis by the jog-feed operation further performed by the operator, the measurement axis determination unit 12 determines that the X-axis is being measured, and simultaneously, the measurement direction determination unit 14 determines that the measurement probe 114 is moving in the positive direction along the X-axis. As a result, a state in which the measurement probe 114 is moving in the positive direction along the X-axis is shown on the measurement probe movement direction display area 254 as arrow G of FIG. 12.

At this time, the measurement type determination unit 22 extracts the corner measurement shown in FIG. 17 as the measurement taught by the jog-feeding performed by the operator based on information that the X-axis and the Y-axis were used in the measurement from the measurement axis determination unit 12, information that the measurement probe 114 moved in the positive direction along both the X-axis and the Y-axis from the measurement direction determination unit 14, information that there are two measurement points from the measurement point counting unit 16, and information that the current measurement includes two steps in which the measurement probe 114 moved in the positive direction along the Y-axis and the X-axis from the measurement process storage unit 18. As a result, the icon of FIG. 17 is actively displayed as the icon 252 indicating the measurement type (FIG. 12).

When the front end of the measurement probe 114 contacts the side surface of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26.

Furthermore, upon receiving the skip signal, the NC device 150 reverses the Y-axis feeding, the measurement probe 114 is spaced from the side surface of the workpiece W, and after moving a predetermined distance, the reversing operation of the measurement probe 114 stops. The NC device 150 performs similar measurements for the measurement point in the X-axis direction. The calculation unit 24 obtains the coordinates of the corner part between the two surfaces which were contacted by the measurement probe 114 from the coordinates of the two measurement points. The measurement results are displayed on the coordinate display area 258 along with the icon of FIG. 17 (FIG. 12).

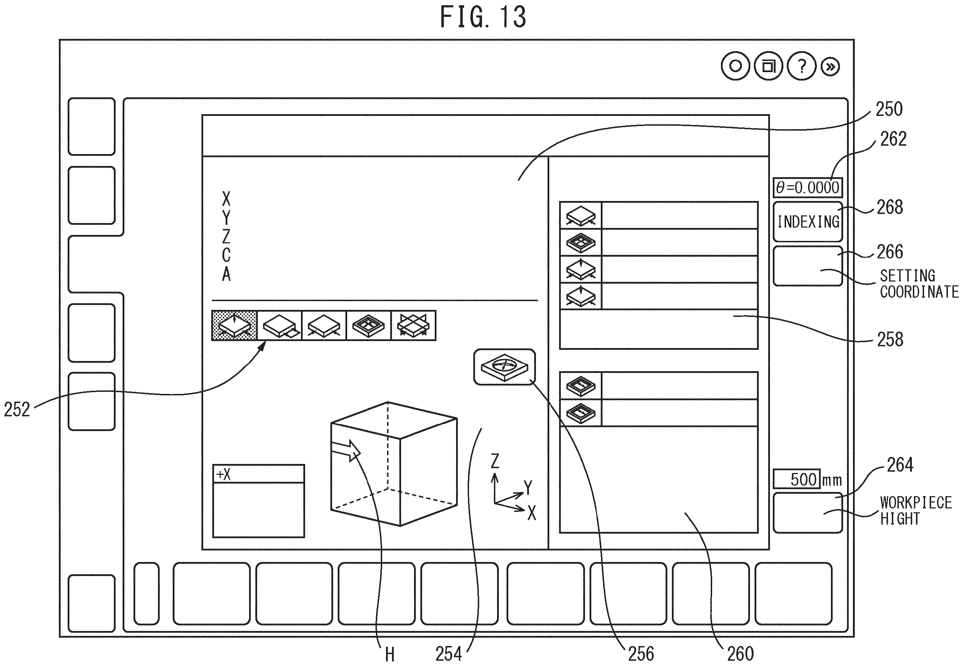

In FIG. 13, when the measurement probe 114 moves towards the workpiece W along the X-axis by the further jog-feed operations performed by the operator, the measurement axis determination unit 12 determines that the X-axis is being measured, and simultaneously, the measurement direction determination unit 14 determines that the measurement probe 114 is moving in the positive direction along the X-axis. As a result, a state in which the measurement probe 114 moves in the positive direction along the X-axis is shown on the measurement probe movement direction display area 254 as arrow H.

When the operator performs further jog-feed operations, the measurement probe 114 moves in a direction (Y-axis direction) perpendicular to the linear path (X-axis) along which the measurement probe initially moved towards the workpiece W, and the measurement probe 114 moves linearly towards the same side surface of the workpiece W in the X-axis direction parallel with the linear path and contacts the side surface. At this time, the measurement axis determination unit 12 determines that the X-axis is being measured, and simultaneously, the measurement direction determination unit 14 determines that the measurement probe 114 is moving in the positive direction along the X-axis. As a result, an arrow I indicating a state in which the measurement probe 114 is moving in the positive direction along the X-axis is added to the measurement probe movement direction display area 254.

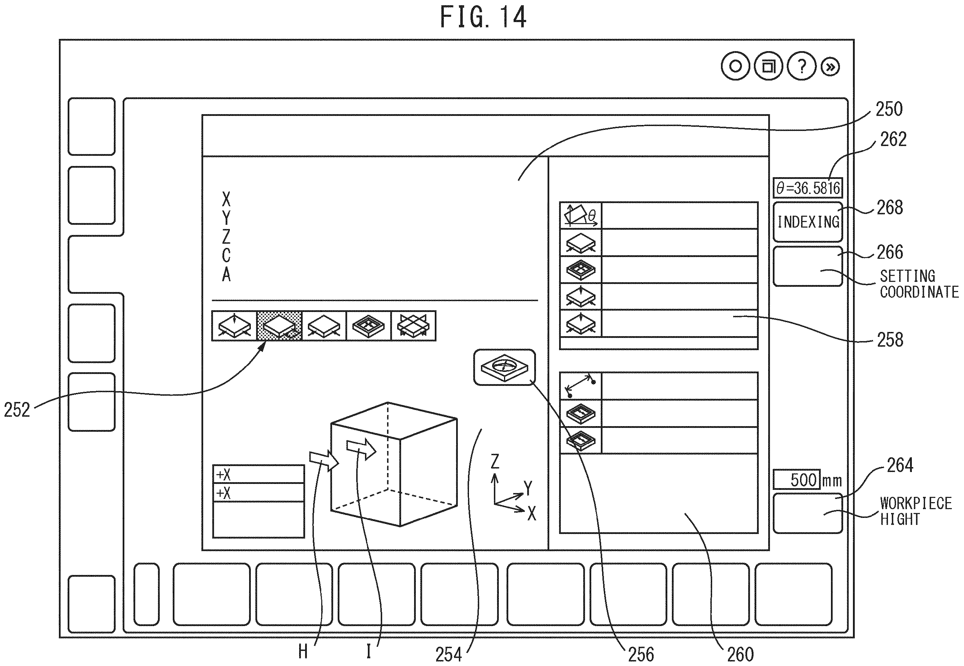

At this time, the measurement type determination unit 22 extracts the inclination measurement shown in FIG. 22 as the measurement taught by the jog-feeding performed by the operator based on information that the X-axis was used in the measurement from the measurement axis determination unit 12, information that the measurement probe 114 moved in the positive direction along the X-axis from the measurement direction determination unit 14, information that there are two measurement points from the measurement point counting unit 16, and information that the current measurement includes two steps in which the measurement probe moved in the positive direction along the X-axis from the measurement process storage unit 18. As a result, the icon of FIG. 22 is actively displayed as the icon 252 indicating the measurement type (FIG. 14).

When the front end of the measurement probe 114 contacts the side surface of the workpiece W, a skip signal is output from the measurement probe 114 to the NC device 150. When the skip signal is received, the coordinates of each of the X-feed axis, Y-feed axis, and Z-feed axis at that time are output from the NC device 150 to the measurement point coordinate storage unit 26.

Furthermore, upon receiving the skip signal, the NC device 150 reverses the X-axis feeding, the measurement probe 114 is spaced from the side surface of the workpiece W, and after moving a predetermined distance, the reversing operation of the measurement probe 114 stops. The NC device 150 performs a similar measurement for the remaining measurement point. The calculation unit 24 obtains the inclination angle θ of the workpiece W contacted by the measurement probe 114 with respect to the X-axis by calculation from the coordinate values of the two measurement points. The measurement results are displayed on the coordinate display area 258 along with the icon of FIG. 17 (FIG. 14).

Note that when performance of a more sophisticated measurement is desired, it is preferable to make contact from a direction normal to the surface of the workpiece W when contacting the measurement probe 114 with the workpiece W. If contact is not made from the normal direction, the deflection of the measurement probe 114 is not uniform and the amount of deflection of the measurement probe 114 changes during contact, bringing about an error in the measurement result. In order to perform measurement under conditions in which contact is made from the normal direction, after tapping or clicking the index button 268, pressing the automatic measurement start button 228, and automatically repeating the contact between the measurement probe 114 and the workpiece W, the contact angle is corrected by an angle displayed on the coordinate display area 258 for the operation taught by the jog-feed operation performed by the operator, whereby the measurement probe 114 contacts the surface of the workpiece W from the normal direction.

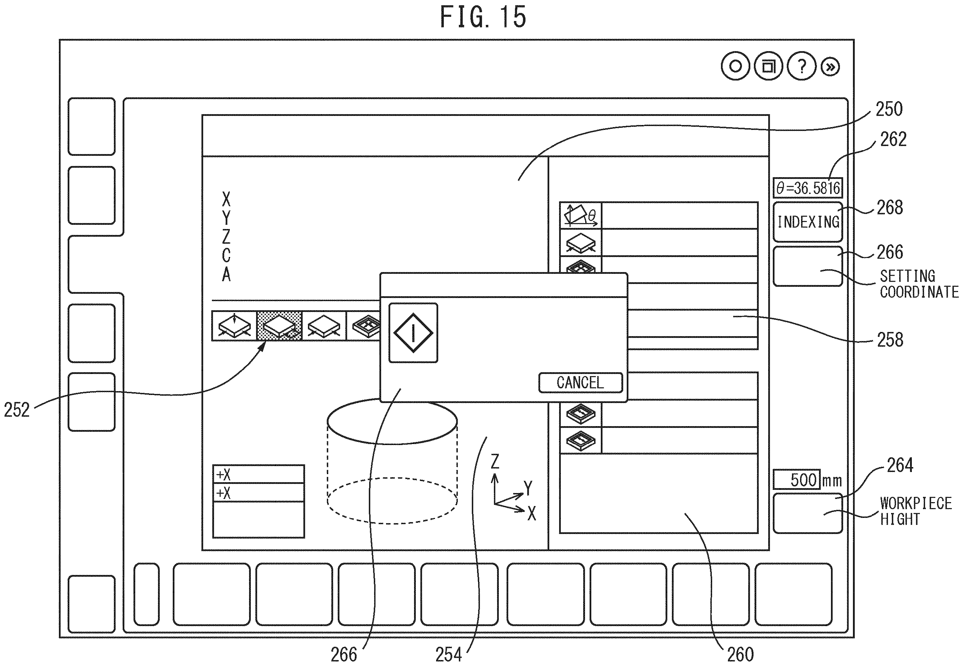

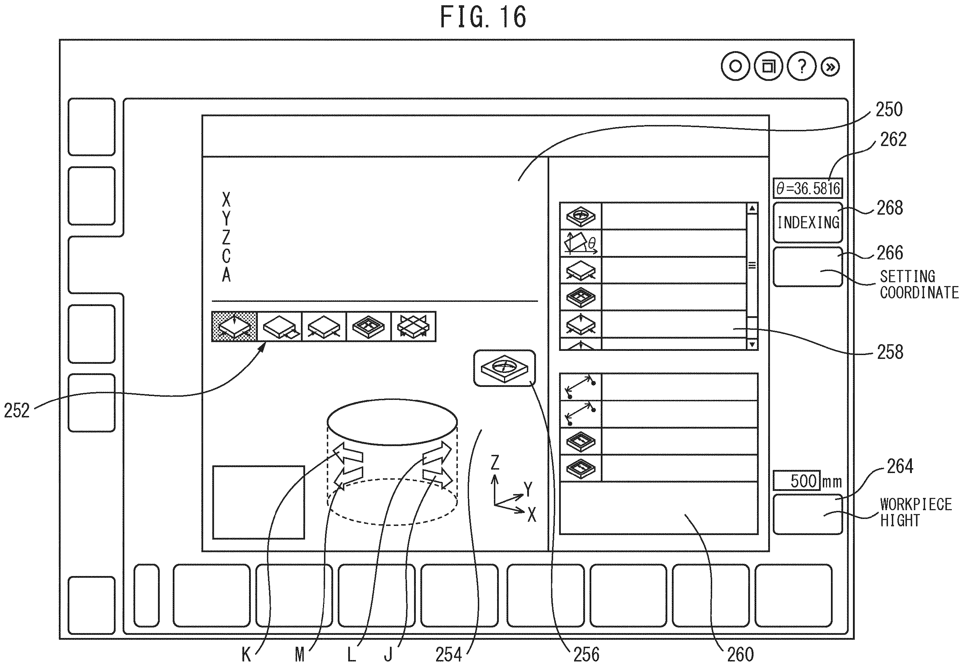

Next, automatic execution of the cylindrical hole center measurement will be described with reference to FIGS. 15 and 16.

After the measurement probe has been disposed in the vicinity of the center of the cylindrical hole formed in the workpiece W, which is the to-be-measured object, by the jog-feed operation performed by the operator, when the cylinder measurement button 256 on the window is tapped or clicked, a dialog box prompting the operator to press the automatic measurement start button 228 on the jog console is displayed on the window.

When the operator presses the automatic measurement start button 228 in accordance with the instructions of the dialog box, four arrows J to M in the positive and negative directions along the X-axis and the Y-axis are displayed as the movement directions of the measurement probe 114, the measurement probe 114 is moved in the positive and negative directions of the X-axis and is then sequentially moved in both the positive and negative directions along the Y-axis in accordance with the four arrows J to M, the measurement probe 114 then contacts the side surface of the cylindrical hole of the workpiece W, and the coordinates of the contact points are stored in the measurement point coordinate storage unit 26. The calculation unit 24 receives the coordinate values of the four measurement points from the measurement point coordinate storage unit 26 and calculates the center coordinates of the cylindrical hole. The measurement results are displayed on the coordinate display area 258 together with the icon of FIG. 20.

Since the operator manually operates (by jog-feed operation or feed operation by means of a manual pulse generator) the measurement probe 114 to directly teach the measurement points to apparatus for measuring, it is not necessary for the operator to select the measurement target of the measurement or to input the approximate dimensions of the workpiece. Furthermore, since the teaching results are sequentially displayed on the display unit 202 (28) of the operation board 200 as arrows with respect to the workpiece, errors in the selection of the measurement type by the operator can be prevented.

The measurement results can be output to the NC device 150 by the operation of the measurement window shown in FIGS. 5 to 16. As a result, it is possible to set the corner position of the workpiece W (FIG. 17), the center position of the workpiece W (FIGS. 18 and 21), or the upper surface position of the workpiece W (FIG. 23) in the workpiece coordinate system of the NC operation board 150. In the prior art, it is necessary to separately perform the measurement of the workpiece W and the setting of workpiece coordinates. However, in the present invention, it is possible to execute measurement and setting as a series of operations within the same measurement window.

In the measurement of a workpiece, when the measurement probe contacts the workpiece, it is necessary to stop the feed axes. However, after contact, the measurement probe continues to move toward the workpiece until the NC device completely stops. Thus, moving the measurement probe at a high speed can damage the measurement probe. In the embodiment described above, since the operator inputs the height of the workpiece using the button 264 for setting the danger zone, when entering an area in which the workpiece is present, it is possible to decelerate the movement speed of the measurement probe to a safe speed.

Note that in the embodiment described above, though a jog-feed operation by means of a manual operation to move the measurement probe 114 and the workpiece W relative to each other has been described, a manual operation means such as a manual pulse generator may be used.

### REFERENCE SIGNS LIST

- 10: Measuring Apparatus
- 12: Measurement Axis Determination Unit
- 14: Measurement Direction Determination Unit
- 16: Measurement Point Counting Unit
- 18: Measurement Step Storage Unit
- 20: Automatic Measurement Command Unit
- 22: Measurement Type Determination Unit
- 24: Calculation Unit
- 26: Measurement Point Coordinate Storage Unit
- 28: Display Unit
- 100: Machine Tool
- 106: Table
- 112: Spindle
- 114: Measurement Probe
- 150: NC Device
- 202: Display Panel
- 220: Jog Console
- 224: Jog Button
- 226: Override Switch
- 228: Automatic Measurement Start Button
- 250: Feed Axis Coordinate Display Area
- 252: Icon
- 254: Measurement Probe Movement Direction Display Area
- 256: Cylindrical Measurement Button
- 258: Coordinate Display Area
- 260: Dimensions Display Area
- 262: Inclination Angle Display Area

## Claims

1. An apparatus (10) for measuring a workpiece (W) which is fixed to a table (106) of a machine tool (100) which includes a plurality of feed axes for moving a spindle (112) and the table (106) relative to each other, the apparatus comprising:
a measurement probe (114) adapted to be mounted on a front end of the spindle (112) of the machine tool (100),
feed axes adapted for moving the spindle (112) and the table (106) relative to each other by a manual operation of an operator,
a measurement type determination unit (22), and
a display unit (28),
wherein the apparatus is arranged so that, when the spindle (112) and the table (106) are moved relative to each other by the manual operation of the operator and the measurement probe (114) contacts the workpiece (W) fixed on the table (106), the feed axis which has been used to move the measurement probe (114) and the movement direction of the feed axis are stored, a type of measurement performed by the operator is predicted by the measurement type determination unit (22) based on history of the feed axis which has been used to move the measurement probe (114) and the movement direction of the feed axis, and the predicted measurement type is displayed by the display unit (28).

2. The apparatus for measuring a workpiece according to claim 1, wherein the apparatus is arranged so that after a plurality of measurement types which are predicted by the measurement type determination unit (22) from the history of the feed axes used to move the measurement probe and the movement directions of the feed axes are displayed by the display unit (28), when the spindle (112) and the table (106) are moved relative to each other by the manual operation of the operator and the measurement probe (114) contacts the workpiece (W) fixed on the table (106), the displayed measurement types are reduced.

3. The apparatus for measuring a workpiece according to claim 1, wherein the measurement type determination unit (22) is adapted to store the measurement types in association with the feed axis which has been used to move the measurement probe (114), the movement direction of the feed axis, the number of times the measurement probe (114) has come into contact with the workpiece (W), and an order of current jog-feed operations.

4. The apparatus for measuring a workpiece according to claim 1, wherein the display unit (28) is configured for sequentially displaying jog-feed operations executed by the operator.

5. The apparatus for measuring a workpiece according to claim 1, wherein said apparatus is arranged to output measurement results to an NC device (150) of the machine tool (100)

## Patentansprüche

1. Vorrichtung (10) zum Vermessen eines Werkstücks (W), das an einem Tisch (106) einer Werkzeugmaschine (100) befestigt ist, die eine Vielzahl von Vorschubachsen zum Bewegen einer Spindel (112) und des Tisches (106) relativ zueinander aufweist, wobei die Vorrichtung umfasst:
einen Messtaster (114), der so angepasst ist, dass er an einem vorderen Ende der Spindel (112) der Werkzeugmaschine (100) angebracht werden kann,
Vorschubachsen, die zum Bewegen der Spindel (112) und des Tisches (106) relativ zueinander durch eine manuelle Bedienung eines Bedieners angepasst sind,
eine Messartbestimmungseinheit (22), und
eine Anzeigeeinheit (28),
wobei die Vorrichtung so angeordnet ist, dass, wenn die Spindel (112) und der Tisch (106) durch die manuelle Bedienung des Bedieners relativ zueinander bewegt werden und der Messtaster (114) das auf dem Tisch (106) befestigte Werkstück (W) berührt, die Vorschubachse, die zum Bewegen des Messtasters (114) verwendet wurde, und die Bewegungsrichtung der Vorschubachse gespeichert werden, eine Messart, die von dem Bediener durchgeführt wird, von der Messartbestimmungseinheit (22) basierend auf der Historie der Vorschubachse, die verwendet wurde, um den Messtaster (114) zu bewegen, und der Bewegungsrichtung der Vorschubachse vorhergesagt wird, und die vorhergesagte Messart von der Anzeigeeinheit (28) angezeigt wird.

2. Vorrichtung zum Vermessen eines Werkstücks nach Anspruch 1, wobei die Vorrichtung so eingerichtet ist, dass nach der Anzeige mehrerer von der Messartbestimmungseinheit (22) aus der Historie der zum Bewegen des Messtasters verwendeten Vorschubachsen und der Bewegungsrichtungen der Vorschubachsen vorhergesagten Messarten durch die Anzeigeeinheit (28), wenn die Spindel (112) und der Tisch (106) durch die manuelle Bedienung des Bedieners relativ zueinander bewegt werden und der Messtaster (114) das auf dem Tisch (106) befestigte Werkstück (W) berührt, die angezeigten Messarten reduziert werden.

3. Vorrichtung zum Vermessen eines Werkstücks nach Anspruch 1, wobei die Messartbestimmungseinheit (22) dazu eingerichtet ist, die Messarten in Verbindung mit der Vorschubachse, die zum Bewegen des Messtasters (114) verwendet wurde, der Bewegungsrichtung der Vorschubachse, der Anzahl der Berührungen des Messtasters (114) mit dem Werkstück (W) und einer Reihenfolge der aktuellen Tippvorschubbedienungen zu speichern.

4. Vorrichtung zum Vermessen eines Werkstücks nach Anspruch 1, wobei die Anzeigeeinheit (28) zur sequentiellen Anzeige von durch den Bediener ausgeführten Tippvorschubbedienungen ausgebildet ist.

5. Vorrichtung zum Vermessen eines Werkstücks nach Anspruch 1, wobei die Vorrichtung dazu eingerichtet ist, Messergebnisse an eine NC-Vorrichtung (150) der Werkzeugmaschine (100) auszugeben.

## Revendications

1. Appareil (10) de mesure d'une pièce (W) qui est fixée à une table (106) d'une machine-outil (100) qui comprend une pluralité d'axes d'avance pour déplacer une broche (112) et la table (106) l'une par rapport à l'autre, l'appareil comprenant :
une sonde de mesure (114) adaptée pour être montée sur une extrémité avant de la broche (112) de la machine-outil (100),
des axes d'avance permettant de déplacer la broche (112) et la table (106) l'une par rapport à l'autre par une opération manuelle d'un opérateur,
une unité de détermination de type de mesure (22), et
une unité d'affichage (28),
dans lequel
l'appareil est agencé de sorte que,
lorsque la broche (112) et la table (106) sont déplacées l'une par rapport à l'autre par l'opération manuelle de l'opérateur et que la sonde de mesure (114) entre en contact avec la pièce (W) fixée à la table (106), l'axe d'avance qui a été utilisé pour déplacer la sonde de mesure (114) et le sens de déplacement de l'axe d'avance sont mémorisés, un type de mesure effectué par l'opérateur est défini par l'unité de détermination de type de mesure (22) sur la base de l'historique de l'axe d'avance qui a été utilisé pour déplacer la sonde de mesure (114) et du sens de déplacement de l'axe d'avance, et le type de mesure défini est affiché par l'unité d'affichage (28).

2. Appareil de mesure d'une pièce selon la revendication 1, dans lequel l'appareil est agencé de sorte que, après qu'une pluralité de types de mesure qui sont définis par l'unité de détermination de type de mesure (22) à partir de l'historique des axes d'avance utilisés pour déplacer la sonde de mesure et des sens de déplacement des axes d'avance sont affichés par l'unité d'affichage (28), lorsque la broche (112) et la table (106) sont déplacées l'une par rapport à l'autre par l'opération manuelle de l'opérateur et que la sonde de mesure (114) entre en contact avec la pièce (W) fixée à la table (106), les types de mesure affichés sont réduits.

3. Appareil de mesure d'une pièce selon la revendication 1, dans lequel l'unité de détermination de type de mesure (22) est conçue pour mémoriser les types de mesure en association avec l'axe d'avance qui a été utilisé pour déplacer la sonde de mesure (114), le sens de déplacement de l'axe d'avance, le nombre de fois que la sonde de mesure (114) est entré en contact avec la pièce (W), et un ordre d'opérations actuelles de rapprochement par à-coups.

4. Appareil de mesure d'une pièce selon la revendication 1, dans lequel l'unité d'affichage (28) est configurée pour afficher séquentiellement des opérations de rapprochement par à-coups effectuées par l'opérateur.

5. Appareil de mesure d'une pièce selon la revendication 1, dans lequel ledit appareil est agencé de manière à fournir des résultats de mesure à un dispositif de commande numérique (150) de la machine-outil (100).
